Europäisches Patentamt

European Patent Office

Office européen des brevets

(11) Veröffentlichungsnummer: **0 181 639**
A1

(12) **EUROPÄISCHE PATENTANMELDUNG**

(21) Anmeldenummer: **85114476.6**

(22) Anmeldetag: **13.11.85**

(51) Int. Cl.⁴: **F 02 C 7/272**

(30) Priorität: **14.11.84 DE 3441509**

(43) Veröffentlichungstag der Anmeldung:
**21.05.86 Patentblatt 86/21**

(84) Benannte Vertragsstaaten:
**DE FR GB IT**

(71) Anmelder: **Klöckner-Humboldt-Deutz
Aktiengesellschaft
Deutz-Mülheimer-Strasse 111 Postfach 80 05 09
D-5000 Köln 80(DE)**

(72) Erfinder: **Weber, Thomas
Am Urseler Weg 6
D-6370 Oberursel 4(DE)**

(54) **Verfahren und Einrichtung zum Anlassen einer Gasturbine.**

(57) Es wird ein Verfahren und eine Einrichtung zum Anlassen einer einen Verdichter, eine Turbine sowie eine Brennkammer (8) aufweisenden Gasturbine, insbesondere eines Strahltriebwerkes, mittels heißer Treibgase aus einer Treibgasquelle vorgeschlagen, wobei für den Anlaßvorgang die Energie der Treibgase zumindest teilweise auf die Gasturbine übertragen wird. Dabei ist es vorgesehen, die heißen Treibgase der Treibgasquelle gleichzeitig zum Antrieb der Turbine und zur Zündung der Verbrennung in der Brennkammer (8) zu nutzen. Besonders vorteilhaft ist dann die Verwendung von nur einer einzigen Treibgasquelle möglich.

FIG. 2

Croydon Printing Company Ltd.

5000 Köln 80, den 7.Nov.198 5
D 84/57 AE-ZPB Ha/B

## Verfahren und Einrichtung zum Anlassen einer Gasturbine

Die Erfindung bezieht sich auf ein Verfahren zum Anlassen einer einen Verdichter, eine Turbine sowie eine Brennkammer aufweisenden Gasturbine, insbesondere eines Strahltriebwerks, mittels heißer Treibgase aus einer Treibgasquelle, wobei für den Anlaßvorgang die Energie der Treibgase zumindest teilweise auf die Gasturbine übertragen wird. Daneben bezieht sich die Erfindung auf eine Einrichtung zum Anlassen einer Gasturbine nach der Oberbegriff des Patentanspruchs 5.

Zum Anlassen von Gasturbinen, hier vor allem von Strahltriebwerken, ist die Verwendung von separat erzeugten, heißen Treibgasen zum Antrieb des Turbosatzes während des Anlaßvorganges ein vielfach erprobtes Verfahren. Die heißen Treibgase werden dabei zumeist von gezündeten Festbrennstofftreibsätzen, beispielsweise in Form von Kartuschen, erzeugt, wobei die Treibgase mehrerer Kartuschen die Turbine des Turbosatzes antreiben. Weitgehend gleichzeitig aber unabhängig davon wird die Brennkammer entweder elektrisch oder auch durch die Treibgase einer weiteren Kartusche gezündet. Nach kurzer Zeit kommt der Turbosatz auf Touren, so daß der Verdichter komprimierte Luft in die Brennkammer drückt, in der mit eingespritztem Brennstoff infolge der Zündung die reguläre Verbrennung in Gang kommt. Da die heißen Treibgase der Festbrennstofftreibsätze eine stark erodierende bzw. korrodierende Wirkung auf Turbinenschaufeln haben können, werden solche Treibgase vielfach nicht auf die Hauptturbine der Gasturbinenanlage, sondern auf eine getrennte Hilfs- oder Anlaßturbine gelei- tet (DE-PS 12 56 481). Diese Anlaßturbine ist mit dem Tur- bosatz gekuppelt und treibt diesen während des Anlaßvorganges durch die Energie der Treibgase an. Die Brennkammer der Gasturbine wird getrennt von dieser Einrichtung gezündet. In jedem Fall müssen zur sicheren Funktion des Anlaßvorganges alle Treibgasquellen und die Brennkammerzündung nahezu gleichzeitig einwandfrei arbeiten.

Nachteilig ist es bei einem derartigen Verfahren zum Anlassen einer Gasturbine, daß keine Kombination zwischen dem Antrieb der Turbine und der Zündung der Brennkammer besteht. Versagt beispielsweise die Zündung der Brennkammer, so muß der gesamte Startvorgang wiederholt werden. Außerdem werden für die entsprechende Einrichtung eine Vielzahl von Bauteilen, wie beispielsweise sogar eine zusätzliche Hilfsturbine und separate Vorrichtungen zur Zündung, für die sichere Funktion des Anlaßvorganges benötigt. Eine auf diesem Wege anzulassende Gasturbine ist somit entsprechend teuer in der Herstellung.

Aufgabe der vorliegenden Erfindung ist es daher, ein Verfahren und eine Einrichtung zum Anlassen von Gasturbinen, der gattungsgemäßen Art dahingehend zu verbessern, daß der Bauaufwand der gesamten Gasturbinenanlage verringert wird und daß die Zuverlässigkeit des Anlaßvorganges selbst erheblich erhöht wird.

Diese Aufgabe wird durch ein Verfahren der gattungsgemäßen Art durch die im Kennzeichen des Anspruchs 1 aufgeführten Merkmale gelöst.

Bei dem erfindungsgemäßen Verfahren ist es vorgesehen, die heißen Treibgase aus einer Treibgasquelle während des Anlaßvorganges einer Gasturbine zugleich zum Antrieb der Turbine und zur Zündung der Brennkammer zu verwenden. Durch diese erfindungsgemäße Lösung wird in vorteilhafter Weise einerseits der Bauaufwand für eine separate Zündeinrichtung der Brennkammer vollständig eingespart und andererseits die Zuverlässigkeit des Anlaßvorganges verbessert, da die Zündung der Brennkammer zwangsläufig mit dem Antrieb der Turbine erfolgt. Ein Versagen dieses Verfahrens zum Anlassen einer Gasturbine ist somit so gut wie ausgeschlossen.

Das erfindungsgemäße Verfahren ist insbesondere bei nur einmalig verwendeten Gasturbinen, wie sie beispielsweise als Strahltriebwerke in unbemannten Flugkörpern zum einmaligen Einsatz (Drohnen) verwendet werden, von besonderem Vorteil und Bedeutung. Bei solchen Strahltriebwerken steht insbesondere die Forderung nach äußerst geringem Bauaufwand und absoluter Zuverlässigkeit des Startvorganges im Vordergrund.

In einer vorteilhaften Weiterbildung der Erfindung wird der der Gasturbine zugeführte Treibgasstrom in zwei Teilströme aufgeteilt, wobei der ersten Teilstrom direkt der Turbine und der zweite Teilstrom direkt in die Brennkammer zugeführt wird. Dadurch ist sicher die Zündung und der Antrieb der Gasturbine erreicht. Das Verhältnis der Treibgasmenge dieser beiden Teilströme zueinander läßt sich durch konstruktive Ausbildungen frei wählen. Als Alternative dazu kann es auch zweckmäßig sein, den gesamten Treibgasstrom mit einer auf die Turbine gerichteten Einströmung in die Brennkammer einzuleiten und dadurch zuerst mit dem heißen Treibgasen den Brennstoff in der Brennkammer zu entzünden sowie danach mit den gleichen Treibgasen die Turbine der Gasturbine anzutreiben. Der Treibgasstrom erreicht so zwangsläufig, da er nacheinander sowohl durch die Brennkammer als auch durch die Turbine geleitet wird, die Zündung und den Antrieb der Turbine.

Bei einer vorteilhaften Weiterbildung des erfindungsgemäßen Verfahrens werden alle für den gesamten Anlaßvorgang benötigten Treibgase von nur einer Treibgasquelle geliefert. Diese Treibgasquelle ist zumeist eine mit Festbrennstoff versehene Kartusche, die über einen Zuleitungskanal mit der Gasturbine verbunden ist. Die Kartusche kann sogar in besonders vorteilhafter Weise außerhalb des Gasturbinentriebwerks, insbesondere außerhalb des gesamten unbemannten Flugkörpers, angeordnet sein und nach dem Anlaßvorgang zur Gewichtsverminderung der Gasturbinenanlage von dieser getrennt werden. In jedem Fall ist durch die Verwendung nur einer Kartusche die hohe Zuverlässigkeit des Anlaßvorganges gesichert; denn selbst wenn diese Kartusche nicht funktioniert, kann schnell eine Ersatzkartusche eingesetzt werden und der Startvorgang fast verzögerungsfrei wiederholt werden.

Eine gattungsgemäße Einrichtung zum Anlassen einer Gasturbine ist erfindungsgemäß dadurch gekennzeichnet, daß die Treibgase von einer Treibgasquelle über einen Zuleitungskanal bis zur Gasturbine geleitet werden, wobei der Zuleitungskanal einerseits mit der Turbine zu dem Antrieb und andererseits mit der Brennkammer zur Zündung eines Brennstoffes verbunden ist. Bei einer derartigen erfindungsgemäßen Einrichtung werden zugleich eine Vielzahl von separaten Bauteilen eingespart und die sichere Funktion des Anlaßvorganges durch die Verbindung der Brennkammerzündung mit dem gleichzeitigen Antrieb des Turbosatzes erreicht.

In einer vorteilhaften Weiterbildung der erfindungsgemäßen Einrichtung werden die heißen Treibgase nicht nur an einer Stelle in die Brennkammer geleitet, sondern beispielsweise bei einer Ringbrennkammer mit mehreren separaten Teilbrennkammer durch mehrere einzelne Teilstränge in jede dieser Teilbrennkammern. Dadurch wird in vorteilhafter Weise die gleichzeitige Entzündung der Verbrennung in allen Teilbrennkammern der Ringbrennkammer erreicht.

Es ist auch zweckmäßig, die heißen Treibgase an mehreren Stellen gleichzeitig auf die Turbine bzw. auf das Laufrad der Turbine zu leiten. Der Zuleitungskanal ist dann in mehrere einzelne Teilstränge verzweigt, die vorzugsweise symmetrisch verteilt auf das Laufrad der Turbine führen. Besonders vorteilhaft sind dabei zwei genau gegenüberliegende oder drei umfangsmäßig gleichmäßig verteilte Teilstränge; denn so wird das Laufrad durch die auftreffenden Treibgase symmetrisch belastet.

In besonders vorteilhafter Ausbildung der Erfindung liefert die Treibgasquelle Treibgase mit einer Temperatur von mindestens 1200 ° C. Bei dieser Temperatur ist einerseits die sichere Zündung der Brennkammer gewährleistet und andererseits die höchstzulässige Temperatur für die Turbinenschaufeln noch nicht überschritten. Es sind beispielsweise Pulversorten für Festbrennstofftreibsätze im Handel erhältlich, die eine solche Temperatur im Treigbasstrahl sicher erreichen.

Als Treibgase liefernde Treibgasquelle ist in einfacher Ausführung eine Festbrennstoffkartusche vorgesehen; denn diese Konstruktion schafft bei optimaler Wiederholgenauigkeit stets die richtige Menge Treibgase im gewünschten Temperaturbereich. Zudem können die Kartuschen leicht ausgewechselt werden und sind deshalb insgesamt einfach zu handhaben. In manchen Anwendungsfällen kann es auch zweckmäßig sein, die Treibgase in einem separaten Brenner aus einem sowohl flüssigen als auch gasförmigen Brennstoff zu erzeugen. Dabei kann als Brennstoff insbesondere auch der Brennstoff der Gasturbine dienen, wodurch eine besondere Bevorratung von Kartuschen oder eines zweiten Brennstoffes entfällt. Bei einer solchen mit flüssigen oder gasförmigen Brennstoffen arbeitenden Treibgasquelle kann einerseits die Menge der Treibgase als auch andererseits deren Temperatur an die Erfordernisse spezieller Anwendungsfälle bei Anlaßvorgängen angepaßt werden. Eine solche nach dem erfindungsgemäßen Verfahren arbeitende Anlaßeinrichtung für Gasturbinen wäre somit hinsichtlich der Treibgasquelle nicht auf eine einzige ganz bestimmte Gasturbine beschränkt, sondern ließe sich in vorteilhafter Weise ohne Wechsel irgendwelcher Teile nur durch Anpassung der Temperatur und Menge der Treibgase an eine breite Palette anzulassender Gasturbinen anpassen.

Weitere Merkmale und Vorteile der Erfindung ergeben sich aus den weiteren Ansprüchen und aus der nachfolgenden Beschreibung.

Aufbau und Funktionsweise der Erfindung sowie ihre Vorteile werden nun anhand der beiliegenden, schematischen Zeichnung eines Ausführungbeispiels näher beschrieben. In der Zeichnung sind nur die zum unmittelbaren Verständnis der Erfindung notwendigen Elemente der Einrichtung zum Anlassen einer Gasturbine dargestellt. Es zeigt:

Fig. 1 einen Längsschnitt durch eine Gasturbine;
Fig. 2 einen Ausschnitt des Längsschnittes aus Fig. 1 mit einer erfindungsgemäßen Einrichtung.

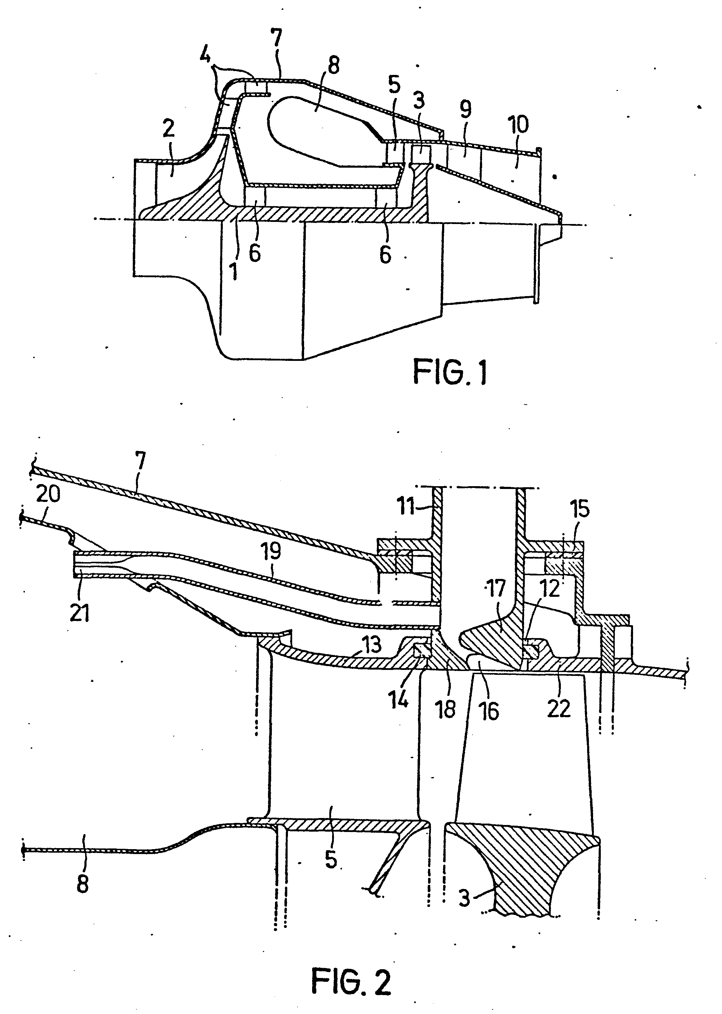

In Fig. 1 ist eine Gasturbine mit einem Radialverdichter und einer axialen Turbine dargestellt. Der Rotor 1 der Gasturbine weist auf dem einen axialen Ende das Laufrad 2 des Radialverdichters und auf dem anderen axialen Ende das Laufrad 3 der Turbine auf. Ferner ist noch ein feststehendes Leitrad 4 des Verdichters und ein Leitrad 5 der Turbine vorgesehen. Der Rotor 1 ist über zwei Lager 6 letztendlich am äußeren Gehäuse 7 sowohl radial als auch axial gelagert. Zwischen Verdichter und Turbine ist eine Brennkammer 8 angeordnet, wobei sich diese aus mehreren ringförmig angeordneten Teilbrennkammern zusammensetzt. An das Laufrad 3 der Turbine schließt sich ein Nachleitkranz 9 und ein Diffusor 10 an. Bei entsprechender Auslegung handelt es sich bei der dargestellten Gasturbine um ein einfaches Strahltriebwerk. Eine geänderte Ausführung mit einem angeflanschten Kraftabtrieb kann jedoch ebenso stationär zum Antrieb einer anzutreibenden Einrichtung verwendet werden.

Der in Fig. 2 gezeigte Ausschnitt des Längsschnittes aus Fig. 1 zeigt bei einer Gasturbinenanlage im wesentlichen das Laufrad 3 und das Leitrad 5 der Turbine sowie die Brennkammer 8 mit einer erfindungsgemäßen Einrichtung. Durch das äußere Gehäuse 7 ist in axialer Höhe des Laufrades 3 und senkrecht zur Achse des Rotors 1 ein Zuleitungskanal 11 in Form eines Rohres angeordnet. Der Zuleitungskanal 11 ragt dabei radial durch eine Bohrung 12 in einer äußeren Zylinderwand 22 in den Strömungskanal der Turbine hinein, wobei die äußere Zylinderwand 22 den Strömungskanal der Turbine radial nach außen und axial vom Leitrad 5 bis zum Diffusor 10 begrenzt. Die Bohrung 12 wird durch einen elastischen, hitzebeständigen Ring 14 gasdicht abgedichtet. Ferner ist der Zuleitungskanal 11 über eine Wärmeisolierung in Form eines Isolierringes 15 fest mit dem äußeren Gehäuse 7 verbunden. Die Mündung 16 des Zuleitungskanals 11 weist direkt auf das Laufrad 3 hin und ist dabei als Düse ausgebildet, so daß die dort austretende Treibgasströmung zumindest eine Strömungsrichtungskomponente in turbinenaxialer Richtung sowie in Turbinenumfangsrichtung erhält. Die Düsenwirkung kann die Strömungsgeschwindigkeit in vorteilhafter Weise auch erhöhen. Zur optimalen Gestaltung der Mündung 16 ist der Zuleitungskanal 11 mit einer von einer Wandung bis radial über die Mittelachse hineinreichenden nasenförmigen Ausbuchtung 17 und einem versetzt dazu angeordneten Umlenkungsstück 18 versehen.

Innerhalb des äußeren Gehäuses 7 der Gasturbine ist eine rohrförmige Abzweigleitung 19 vom Zuleitungskanal 11 vorgesehen. Die Abzweigleitung 19 verläuft ungefähr senkrecht von dem Zuleitungskanal 11 gegenüber der nasenförmigen Ausbuchtung 17 ausgehend in etwa parallel zur Rotorachse bis in die Brennkammer 8. Die Abzweigleitung 19 durchstößt dabei die Wandung 20 der Brennkammer und ragt mit einem düsenartigen Ende 21 in das Innere der Brennkammer 8 hinein, wobei das Ende 21 fächerartig ausgebildet ist.

Der Zuleitungskanal 11 bildet nach der nasenförmigen Ausbuchtung 17 bis zur Mündung 16 einen ersten Teilstrang und die Abzweigleitung 19 einen zweiten Teilstrang. Der Strömungsquerschnitt der Abzweigleitung 19 ist dabei so bemessen, daß ein wesentlicher Druckabfall entsteht. Dieser Druckabfall der Abzweigleitung 19 ist erheblich größer als der Druckabfall im ersten Teilstrang. Ein durch den Zuleitungskanal 11 strömendes Medium wird somit zum größten Teil durch den ersten Teilstrang und die Mündung 16 auf das Laufrad 3 der Turbine geleitet.

Außerhalb und getrennt von der Gasturbine ist eine nicht dargestellte, an den Zuleitungskanal 11 angeschlossene Treibgasquelle angeordnet. Diese Treibgasquelle kann in besonders vorteilhafter Weise eine auswechselbare Festbrennstoffkartusche sein.

Zum Anlassen der Gasturbine wird die Treibgasquelle gezündet, und die heißen Treibgase strömen durch den Zuleitungskanal 11 geradlinig auf das Laufrad 3 der Turbine zu. Innerhalb des äußeren Gehäuses 7 der Gasturbine teilen sich die Treibgase an der nasenförmigen Ausbuchtung 17 in zumindest zwei Teilströme auf. Ein erster Teilstrom gelangt an der nasenförmigen Ausbuchtung 17 und dem dazugehörige Umlenkungsstück 18 vorbei und trifft durch die Mündung 16 direkt auf das Laufrad 3 der Turbine, die dadurch angetrieben wird. Ein erheblich kleinerer Teilstrom der Treibgase wird durch die nasenförmige Ausbuchtung 17 in den zweiten Teilstrang, nämlich die Abzweigleitung 19 umgelenkt. Die Treibgase strömen durch die Abzweigleitung 19 und das düsenartige Ende 21 in das Innere der Brennkammer 8. Das düsenartige Ende 21 fächert die Treibgase zu einer möglichst breiten und flachen Flamme auf.

Durch die heißen Treibgase des ersten Teilstranges wird der Rotor 1 in Drehung versetzt, und der Verdichter beginnt, komprimierte Luft an die Brennkammer 8 zu liefern. Der zweite Teilstrang zündet durch die am düsenartigen Ende 21 flammenartig austretenden heißen Treibgase den in die Brennkammer 8 eingespritzten Brennstoff. Es setzt die reguläre Verbrennung des Brennstoffes mit der verdichteten Luft ein. Die entstehenden heißen Verbrennungsgase strömen durch das Leitrad 5 auf das Laufrad 3 der Turbine und beginnen ebenfalls die Turbine anzutreiben. Nach kurzer Zeit überschreitet die Drehzahl des Rotors 1 den kritischen Wert, und die Gasturbine kann ohne fremde Energiezufuhr durch die heißen Treibgase nur mit der eigenen Brennkammer 8 betrieben werden. Der Anlaßvorgang ist beendet.

Der Zuleitungskanal 11 wird während des Anlaßvorganges sehr heiß, weshalb ein Isolierungsring 15 die Wärmeübertragung an das äußere Gehäuse 7 der Gasturbine verhindern. Der Zuleitungskanal 11 ist so an dem äußeren Gehäuse 7 befestigt, daß er auch im warmen Zustand durch Wärmedehung in keinem Fall mit dem Laufrad 3 in Berührung treten kann. Der hitzebeständige Ring 14 dient als druckdichte Abdichtung gegenüber dem Strömungskanal und kann eine Verschiebung des Zuleitungskanal 11 in Längsrichtung aushalten.

Zur gleichmäßigen Entzündung aller Teilbrennkammern der Ringbrennkammer können auch in vorteilhafter Weise mehrere Abzweigleitungen 19 zu jeder dieser Teilbrennkammern vorgesehen sein. Alle Abzweigleitungen 19 weisen dabei einen hohen Druckverlust auf, so daß der größte Teilstrom der Treibgase auf die Turbine geleitet wird. Es wäre alternativ jedoch auch möglich, nur eine Teilbrennkammer zu entzünden und von dieser gezündeten Brennkammer ausgehend die jeweils benachbarten Teilbrennkammer nacheinander zu zünden.

In vorteilhafter Ausbildung der Erfindung kann es ebenso zweckmäßig sein, den Zuleitungskanal 11 schon direkt nach der Treibgasquelle in zwei oder mehrere Teilstränge zu verzweigen und diese Teilstränge getrennt in das Innere der Gasturbine hineinzuführen. Der Zuleitungskanal 11 kann sich zweckmäßig auch in Form beispielsweise eines Hosenrohres verzweigen und muß nicht zwangsläufig senkrecht in die Gasturbine hineingeführt sein. Auch kann es unter bestimmten Bedingungen vorteilhaft sein, die Treibgasquelle ganz dicht oder direkt an die Gasturbine anzuordnen.

In besonders vorteilhafter Weise liefert die Treibgasquelle Treibgase mit einer Temperatur von mindestens 1200°C. Diese Temperatur ist gleichermaßen gut für die Entzündung des Brennstoffes und den Antrieb der Turbine geeignet. Die Treibgase werden von der Treibgasquelle so in die Turbine geleitet, daß die Treibgase beides sicher erreichen.

5000 Köln 80, den 7.Nov.1985
D 84/57 AE-ZPB Ha/B

## Patentansprüche

1.    Verfahren zum Anlassen einer einen Verdichter, eine Turbine sowie eine Brennkammer (8) aufweisenden Gasturbine, insbesondere eines Strahltriebwerks, mittels heißer Treibgase aus einer Treibgasquelle, wobei für den Anlaßvorgang die Energie der Treibgase zumindest teilweise auf die Gasturbine übertragen wird,
dadurch gekennzeichnet, daß für den Anlaßvorgang von der Treibgasquelle ein Strom Treibgase zum Antrieb der Turbine der Gasturbine und zur Zündung eines Brennstoffes in der Brennkammer (8) der Gasturbine verwendet wird.

2.    Verfahren nach Anspruch 1, dadurch gekennzeichnet, daß der Strom der Treibgase in einen ersten Teilstrom, der auf die Turbine geleitet wird, und in einen zweiten Teilstrom, welcher in die Brennkammer (8) geführt wird, aufgeteilt wird.

3.    Verfahren nach Anspruch 2, dadurch gekennzeichnet, daß mit dem ersten Teilstrom der Treibgase direkt das Laufrad (3) der Turbine beaufschlagt wird.

4.    Verfahren nach einem der Ansprüche 1 bis 3, dadurch gekennzeichnet, daß alle für den Anlaßvorgang benötigten Treibgase von einer einzigen Treibgasquelle geliefert werden.

0181639
07.11.1985
D 84/57

5. Einrichtung zum Anlassen einer einen Verdichter, eine Turbine sowie eine Brennkammer (8) aufweisenden Gasturbine, insbesondere eines Strahltriebwerkes, mittels einer über einen Zuleitungskanal (11) heiße Treibgase liefernden Treibgasquelle, dadurch gekennzeichnet, daß der Zuleitungskanal (11) mit der Turbine der Gasturbine und mit der Brennkrammer (8) der Gasturbine verbunden ist, wobei die Treibgase einerseits die Turbine antreiben und andererseits einen Brennstoff in der Brennkammer (8) zünden.

6. Einrichtung nach Anspruch 5, dadurch gekennzeichnet, daß der Zuleitungskanal (11) zumindest zwei Teilstränge aufweist und daß ein erster Teilstrang bis zur Turbine führend und ein zweiter Teilstrang bis in die Brennkammer (8) führend ausgebildet ist.

7. Einrichtung nach Anspruch 5 oder 6, dadurch gekennzeichnet, daß die Treibgasquelle getrennt von der Gasturbine angeordnet ist und über den Zuleitungskanal (11) mit dieser verbunden ist.

8. Einrichtung nach einem der Ansprüche 6 oder 7, dadurch gekennzeichnet, daß das brennkammerseitige Ende (21) des zur Brennkammer (8) führenden Teilstranges derart düsenartig ausgebildet ist, daß die Treibgase der Brennkammer (8) fächerartig zuführbar sind.

9. Einrichtung nach einem der Ansprüche 6 bis 8, dadurch gekennzeichnet, daß der zur Turbine führende erste Teilstrang direkt an den Laufschaufeln (3) der Turbine mit einer Mündung (16) versehen ist, wobei eine düsenartige Ausbildung (17, 18) der Mündung (16) den Treibgasen zumindest eine turbinenaxiale und/oder turbinenumfangsmäßige Strömungsrichtungskomponente erteilt.

10. Einrichtung nach einem der Ansprüche 5 bis 9, dadurch gekennzeichnet, daß ein einziger Zuleitungskanal (11) für die Treibgase von der Treibgasquelle bis zur Gasturbine vorgesehen ist und der Zuleitungskanal (11) innerhalb der Gasturbine eine Verzweigung in zwei Teilstränge aufweist, wobei der erste Teilstrang mit der Turbine und der zweite Teilstrang mit der Brennkammer (8) verbunden ist.

11. Einrichtung nach Anspruch 10, dadurch gekennzeichnet, daß der Zuleitungskanal (11) in etwa rechtwinklig auf die Turbinenachse führend angeordnet ist und der erste Teilstrang eine geradlinige Fortsetzung des Zuleitungskanals (11) ist sowie der zweite Teilstrang annähernd rechtwinklig und parallel zur Turbinenachse von dem Zuleitungskanal (11) abzweigt.

12. Einrichtung nach einem der Ansprüche 6 bis 11 mit einer in Teilbrennkammern unterteilten Brennkammer, wie beispielsweise eine mit Teilbrennkammern versehene Ringbrennkammer, dadurch gekennzeichnet, daß mehrere weitere Teilstränge des Zuleitungskanals (11) bis in die Teilbrennkammern der Brennkammer (8) führend vorgesehen sind und jeweils ein Teilstrang einer Teilbrennkammer zugeordnet ist.

13. Einrichtung nach einem der Ansprüche 6 bis 12, dadurch gekennzeichnet, daß der Strömungsquerschnitt des zur Turbine führenden ersten Teilstranges erheblich größer als der Strömungsquerschnitt des zur Brennkammer (8) führenden Teilstranges ausgebildet ist.

14. Einrichtung nach einem der Ansprüche 5 bis 13, dadurch gekennzeichnet, daß die Treibgasquelle Treibgase mit einer Temperatur von mindestens 1200 ° C liefert.

FIG.1

FIG.2

HD. KÖLN - DEUTZ

# EUROPÄISCHER RECHERCHENBERICHT

**Europäisches Patentamt**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | GB-A- 889 105 (CAMPBELL)<br><br>* Insgesamt *<br><br>--- | 1-7,9,<br>11,13 | F 02 C 7/272 |
| X | DE-A-1 901 682 (KAHN)<br><br>* Seite 4, Zeile 1 - Ende des Dokuments; Figur 1 *<br><br>--- | 1-7,9,<br>11,13 | |
| A | US-A-3 439 495 (BINSLEY)<br><br>* Insgesamt *<br><br>--- | 1,3-5,<br>10 | |
| X | GB-A-2 005 354 (JASAS)<br><br>* Seite 1, Zeilen 66-86; Seite 1, Zeile 123 - Seite 2, Zeile 1; Seite 2, Zeilen 50-75; Seite 2, Zeile 125 - Seite 3, Zeile 24; Figuren 1,2 *<br><br>----- | 1-7,9,<br>10,11,<br>13 | **RECHERCHIERTE SACHGEBIETE (Int. Cl. 4)**<br><br>F 02 C |

Der vorliegende Recherchenbericht wurde für alle Patentansprüche erstellt

| Recherchenort | Abschlußdatum der Recherche | Prüfer |
|---|---|---|
| DEN HAAG | 18-12-1985 | IVERUS D. |